(19) Europäisches Patentamt
European Patent Office
Office européen des brevets

(11) Numéro de publication : **0 390 729 B1**

# (12) FASCICULE DE BREVET EUROPEEN

(45) Date de publication du fascicule du brevet : **25.05.94 Bulletin 94/21**

(51) Int. Cl.$^5$ : **C09B 67/20,** C08J 3/22

(21) Numéro de dépôt : **90810146.2**

(22) Date de dépôt : **27.02.90**

## (54) Dispersion de colorant liquide.

(30) Priorité : **30.03.89 CH 1157/89**

(43) Date de publication de la demande : **03.10.90 Bulletin 90/40**

(45) Mention de la délivrance du brevet : **25.05.94 Bulletin 94/21**

(84) Etats contractants désignés : **AT BE DE DK ES FR GB GR IT LU NL SE**

(56) Documents cités :
**FR-A- 1 281 976**
**FR-A- 1 324 109**
**FR-E- 94 321**
**GB-A- 1 520 751**

(73) Titulaire : **BASF Peintures + Encres S.A.**
**Zone industrielle de Breuil**
**F-60676 Clermont Cédex (FR)**

(72) Inventeur : **Riblet, Jean-Jacques**
**Marcellaz en Faucigny**
**F-74250 Viuz en Sallaz (FR)**
Inventeur : **Catherin, Gilles**
**12, rue Jean Jaures,**
**Ville-La-Grand**
**F-74100 Annemasse (FR)**

(74) Mandataire : **Steen, Dieter Markus et al**
**c/o ARDIN & CIE S.A.**
**Rue de Genève 122**
**C.P. 56**
**CH-1226 GENEVE-THONEX (CH)**

EP 0 390 729 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet une dispersion de colorant liquide constituant un ingrédiant pour la fabrication de matières plastiques destiné à être incorporé dans ces matières plastiques avant leur transformation et destiné à colorer dans la masse ces matières plastiques, la dispersion comprenant au moins une matière colorante contenue dans un véhicule. Elle concerne également l'utilisation de cette dispersion pour l'obtention de matières plastiques teintées dans la masse.

On connaît principalement quatre types différents de coloration dans la masse de matières plastiques:

a) la coloration directe du polymère lors de sa synthèse,

b) la coloration par mélange maître à concentration de colorant ou pigment très élevé,

c) la coloration par adjonction d'une poudre contenant le colorant ou pigment au granulat et

d) la coloration par dispersion de colorant liquide.

Par le brevet français FR 1.281.976, on connaît des compositions tinctorials qui sont destinées à être appliqués sur des compositions de revêtements en milieu aqueux ou solvant. Ces compositions peuvent comprendre une terpène liquide et forment en tant que telle avec de l'eau ou avec un solvant un film de revêtement. Elles ne constituent pas un ingrédiant pour la fabrication de matières plastiques et leur coloration dans la masse, mais sont des revêtements, enduits ou peintures proprement dits.

La présente invention concerne le dernier type de coloration dans la masse d) cité ci-dessus dans lequel une dispersion de colorant liquide ou pâteuse est mélangée à la matière plastique granulée avant sa transformation, par exemple dans une extrudeuse ou presse à injection.

La plupart des dispersions connues utilisent des plastifiants, en particulier des adipates et/ou des phtalates qui, en fonction du taux d'incorporation dans la matière plastique, modifient de façon sensible les caractéristiques du polymère.

On connaît également des dispersions contenant des esters de sorbitan en tant qu'agent tensio-actif, telles que décrites dans les brevets français Nos. 2.262.089 et 2.265.835. Ces dispersions peuvent, dans certains cas, donner naissance à des gauchissements des articles injectés, à des difficultés de mise en oeuvre, à un patinage de vis, à des dépôts de colorants liquides sur les vis et les moules, et nécessitent une agitation avant l'emploi par suite d'une sédimentation.

Le but de la présente invention est d'améliorer les caracteristiques des dispersions connues en permettant:

a) d'améliorer la stablité dimensionnelle de l'article injecté, de réduire ou d'annuler les phénomènes de retrait et de gauchissement,

b) d'éviter des modifications sensibles des caractéristiques du polymère à colorer,

c) de réduire à un minimum l'absorption d'humidité évitant ainsi une altération de l'aspect de surface par givrage des matières plastiques hygroscopiques,

d) d'augmenter la concentration pigmentaire de la dispersion liquide sans modifier les propriétés rhéologiques, de développer la force colorante de la dispersion liquide, autorisant donc des taux d'utilisation très faibles de dispersion liquide pour colorer les polymères, ce qui est très avantageux du point de vue économique du fait d'une moindre altération des propriétés mécaniques des polymères, et

e) d'incorporer des additifs antistatiques dans la dispersion sans gêner les paramètres de transformation du polymère, tels que le patinage de vis,

f) de conserver son homogénéité au colorant liquide lors du stockage,

g) d'éviter la stagnation de colorant sur l'outillage et de permettre un nettoyage rapide de la machine lors du changement de couleur.

Pour obtenir les objectifs précités, la dispersion conformément à l'invention est caractérisée en ce que le véhicule comprend une huile à base carbures de la série terpénique. Cette huile est avantageusement constituée d'un dimère de l'$\alpha$-pinène.

Selon un mode préféré de l'invention, le véhicule contient un alkylphénol en tant qu'agent tensio-actif permettant une dispersion très homogène et sans altérer l'aspect de surface de la pièce colorée.

Selon les variantes de l'invention, la dispersion peut comprendre en outre au moins un agent tensio-actif choisi parmi le groupe comprenant le dioctylsulfosuccinate de sodium, le benzoate de sodium, les condensats d'acide gras, l'ester phosphorique et l'alkylpolyalcoxylate.

Un jeu de revendications d'utilisation est déposé pour l'Espagne en considération de la reserve conformément à l'article 167,2a CBE.

D'autres avantages ressortent des caractéristiques exprimées dans les revendications dépendantes et de la description exposant ci-après des modes d'exécution particuliers de l'invention.

Les dispersions de colorant liquide utilisées pour colorer dans la masse les matières plastiques comportent un véhicule auquel sont ajoutés les matières colorantes. Le rapport teneur en matières colorantes sur teneur en véhicule est compris entre 0,1 et 5, selon la nature des matières colorantes et du polymère à colorer utilisés et selon l'intensité de coloration désirée.

Pour des pigments minéraux, ce rapport se situe favorablement entre 1,5 et 4, tandis que dans le cas des colorants solubles, ce rapport prend des valeurs plus faibles, par exemple 0,2.

Le composant principal du véhicule est une huile terpénique à base de pinène, ci-après appelée huile terpénique. La teneur du véhicule en huile terpénique varie entre 20 et 90 %, de préférence entre 50 et 80 %.

Selon un mode d'exécution préféré, on utilise une huile terpénique constituée par un dimère $C_{20}H_{32}$ de l'α-pinène de formule développée

2 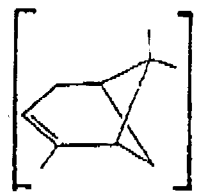

Cette huile à dimère de l'α-pinène se prête particulièrement à une utilisation en tant que véhicule et présente les caractéristiques suivantes :

| | | |
|---|---|---|
| Densité à 20°C | 0,93 - 0,95 | (selon Norme ASTM D40) |
| Viscosité à 20°C (Haake) | 4 à 6 poises | (selon Norme ASTM D44) |
| Couleur Gardner | 4 à 5 | (selon Norme NFT 20.0) |
| Indice de réfraction | 1, 5 à 1,52 | (selon Norme ASTM D12) |
| Indice d'iode | 130 à 140 | (selon Norme ASTM D151) |
| Indice d'acide | nul | (selon Norme ASTM D150) |
| Indice de saponification | nul | (selon Norme ASTM D1462) |

Ce composant est commercialisé sous la marque "DERPHARLIN" par la société DRT (64, rue de Miromesnil, F-75008 Paris). L'utilisation de ce dérivé terpénique permet d'obtenir une grande homogénéité de la dispersion et de la coloration obtenues dans le polymère. Il n'est plus nécessaire d'incorporer des plastifiants dans la dispersion qui modifient de façon sensible les caractéristiques du polymère. L'absorption d'humidité est très faible, ce qui permet d'éviter des altérations de l'aspect de surface par givrage des matières plastiques hygroscopiques. En outre, le véhicule à base de dérivés terpéniques permet de réduire très fortement ou d'annuler les phénomènes de retrait et de gauchissement des pièces obtenues par injection, surtout lorsque ces dernières sont de grande dimension et le polymère est du type polyéthylène ou polypropylène.

Selon des variantes préférées de l'invention, on ajoute au véhicule un alkylphénol dans des proportions variant entre 5 et 35 % en poids du véhicule. On utilise favorablement un alkylphénol éthoxylé, tel que le nonyl phénol éthoxylé de formule

$CH_3 - (CH_2)_8 -$ 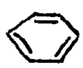 $- O - (CH_2CH_2O)_n - H$

dans laquelle n varie de 2 à 14, mais est de préférence voisin de 6. Cet alkylphénol éthoxylé présente les caractéristiques suivantes :

| | | |
|---|---|---|
| Densité à 20°C | 1,04 | (selon Norme ASTM D4052) |
| Viscosité à 25°C | 3,6 poises | (selon Norme ASTM D445) |
| Coloration Hazen (max) | 150 | (selon Norme NFT 20605) |
| Point de solidification | 17°C | (selon Norme NFT 20-051) |
| Point éclair | 243°C | (selon Norme ASTM D56) |
| HLB | 11,3 | (selon méthode ATLAS) |
| Pouvoir mouillant | 20°C 0,9 g/l | (selon Norme NFT 73.406) |
| T° de trouble | 69 ± 3 | (selon Norme ISO R1065) |

Cet alkylphénol éthoxylé possède dans le véhicule à base d'huile terpénique d'excellentes qualités de mouillant dispersant. Il peut être acheté sous la marque commerciale "CEMULSOL ES" de la maison S.F.O.S. (15, bd de l'Amiral Bruix, F-75116 Paris). Par cette adjonction, on peut augmenter la concentration pigmentaire de la dispersion liquide sans modifier ses propriétés rhéologiques et développer la force colorante. Ces deux points autorisent des taux d'utilisation très faibles de dispersion liquide pour colorer les polymères, variant entre 0,5 et 1 %. Le coût de la coloration est donc faible. Le risque d'altération des propriétés mécaniques du polymère obtenu est réduit, aussi obtient-on une plus grande compatibilité avec différents polymères.

Selon la nature des matières colorantes utilisées, les propriétés tensio-actives du véhicule et donc de la dispersion sont spécifiquement adaptées en ajoutant des constituant choisis parmi le groupe, comprenant le dioctylsulfosuccinate de sodium, le benzoate de sodium, le condensat d'acide gras, le condensat d'acide gras dérivé d'ammonium quaternaire, l'ester phosphorique et l'alkylpolyalcoxylate.

Le dioctylsulfosuccinate de sodium de formule

$$(CH)_2COOC_8H_{17}CHCOOC_8H_{17}SO_3Na$$

et le benzoate de sodium de formule $Na(C_6H_5COO)$ sont ajoutés à la dispersion avec des teneurs maximales de 5 % respectivement de 1 %. De préference, on utilise ces mouillants-dispersants dans un mélange contenant 85 % de dioctylsulfosuccinate de sodium et 15 % de benzoate de sodium et présentant les caractéristiques suivantes :

| | | |
|---|---|---|
| Granulométrie | 15-150 microns | |
| Indice d'iode | 2,5 max | (selon Norme ASTM D151) |
| Indice d'acide | 0,25 max | (selon Norme ASTM D150) |
| Densité | 1,1 | (selon Norme ASTM D4052) |

Ce mélange est commercialisé sous la marque "AEROSOL OTB" par la maison Devineau (42, rue du Paradis, F-75010 Paris).

Le condensat d'acide gras et le condensat d'acide gras dérivé d'ammonium quaternaire sont ajoutés avec des teneurs maximales de 5 %, respectivement 2 % à la dispersion. Ces deux constituants sont hyperdispersants, stabilisateurs de viscosité, et permettent d'augmenter d'avantage la concentration pigmentaire du colorant liquide, la force colorante et de réduire la viscosité.

On utilise avantageusement un condensat d'acide gras d'une densité de 0,91 et d'une viscosité (20°C, 1000 $sec^{-1}$) de 3,8 Pa. s et un condensat d'acide gras dérivé d'ammonium quaternaire d'une densité de 0,93 et d'une viscosité de 20,3 Pa. s. Ces substances sont vendues sous la marque commerciale "SOLSPERSE 3000 et 17000" par la maison ICI (1, av. Newton, F-92142 Clamart).

Ces hyperdispersants "SOLSPERSE" ont une structure chimique originale spécialement conçue pour leur utilisation dans les dispersions de plastifiants. Ils sont constitués de deux parties, chacune d'elles remplissant séparément une fonction essentielle :

- un groupe d'adhérence qui est fortement adsorbé en surface des produits solides (pigment, etc.) et
- une chaîne polymérique ayant une forte affinité pour certains liquides organiques dans le but d'obtenir une stabilisation maximum de la dispersion.

L'ester phosphorique est ajouté avec une teneur maximale de 1 % et joue le rôle de réducteur de viscosité et d'agent mouillant. On utilise de préférence un dispersant à base de sel de potassium d'un ester phosphorique d'une densité de 1,1-1,3 et d'un pH de 7,5 ± 0,5. Ce constituant est vendu sous la marque commerciale "PHOSPHAC D6NK" par la maison Protex (6, rue Barbès, F-92305 Levallois).

L'alkylpolyalcoxylate de formule R - COO - $(CH_2CH_2O)_xH$ est utilisé jusqu'à des teneurs maximales de 20 % de la dispersion. Ce constituant a des propriétés de dispersant et d'antistatique non ionique. Sa densité est de 1 et son pH est de 6,5 ± 0,5. On le trouve vendu sous la marque commerciale "NOPCO SPERSE 188 A" par la maison Henkel-Nopco (boîte postale 4, F-77981 Levallois).

Ces dispersions de colorant liquide sont obtenues en mélangeant le véhicule décrit ci-dessus avec soit des pigments minéraux d'une teneur maximale de 80 %, soit des pigments organiques d'une teneur maximale de 25 %, soit encore des colorants solubles d'une concentration maximale de 30 %.

Les dispersions de colorant liquide prêtes à l'emploi sont dosées, par exemple, grâce à une pompe péristaltique électronique et ajoutées à des teneurs variant entre 0,5 et 3 % aux matières plastiques à transformer, telles que les polyéthylènes, polypropylènes, polycarbonates, polyméthacrylates, polyvinyles, polystyrènes, polyuréthanes, polymères fluorés, polyester, etc. Les dispersions de colorant liquide sont susceptibles d'être utilisées pour tous les modes de transformation par injection et extrusion. Les polymères obtenus présentent une répartition homogène des matières colorantes et des autres additifs dans la matière plastique sans phénomènes de retrait ou de déformation. Grâce au véhicule particulier de la dispersion à base d'huile terpénique, cette dernière est parfaitement compatible avec les polymères usuels, présente un taux d'utilisation faible de l'ordre de 0,5 à 1 % en règle générale et un rendement coloristique optimum.

Les exemples ci-dessous illustrent des applications particulières .

<u>Exemple 1</u>

Dispersion pigmentaire orange utilisable pour colorer des résines hygroscopiques, telles que des polycarbonates, polyméthacrylates :

| | |
|---|---|
| - solvant orange 60 | 15 % |
| - huile terpénique dimère α-pinène | 60,2 % |
| - alkylphénol éthoxylé | 24,8 % |
| | 100 % |

Cette dispersion permet une homogénéité de teinte sans altération de l'aspect de surface par givrage.

<u>Exemple 2</u>

Dispersion pigmentaire brune utilisable pour colorer du polyéthylène haute densité :

| | |
|---|---|
| - pigments d'oxyde de fer | 62,3 % |
| - huile terpénique dimère α-pinène | 27,8 % |
| - alkylphénol éthoxylé | 5,5 % |
| - dioctylsulfosuccinate de sodium | 3,6 % |
| - ester phosphorique | 0,8 % |
| | 100 % |

Utilisée à 0,5 %, cette dispersion permet, par exemple, d'obtenir des casiers à bouteilles sans aucune distorsion ou gauchissement.

<u>Exemple 3</u>

Dispersion pigmentaire verte utilisable pour colorer du polyéthylène haute densité :

| | |
|---|---|
| - pigment de phtalocyanine | 6,1 % |
| - dioxyde de titane | 31,7 % |
| - muscovite | 15,9 % |
| - huile terpénique dimère α-pinène | 27,9 % |
| - alkylphénol | 5,3 % |
| - benzoate de sodium | 0,2 % |
| - dioctylsulfosuccinate de sodium | 0,9 % |
| - condensat d'acide gras | 0,4 % |
| - condensat d'acide gras dérivé d'ammonium quaternaire | 0,4 % |
| - alkylpolyalcoxylate | 11,2 % |
| | 100 % |

Cette disposition utilisée à 0,5 % permet d'obtenir, par exemple, des bouchons cosmétiques avec une excellente stabilité dimensionnelle et ce en présence de pigment de phtalocyanine dans la formulation, pigment provoquant habituellement des phénomènes de retrait et distorsion dans le polyéthylène haute densité.

Exemple 4

Dispersion pigmentaire blanche utilisable pour colorer du polyéthylène haute densité :

| | |
|---|---|
| - dioxyde de titane | 71,4 % |
| - huile terpénique dimère α-pinène | 11,7 % |
| - alkylphénol éthoxylé | 4,8 % |
| - condensat d'acide gras | 0,7 % |
| - alkylpolyalcoxylate | 11,4 % |
| | 100 % |

Utilisée a une teneur de 1,25 %, cette dispersion permet d'obtenir des flacons par extrusion soufflage sans patinage de vis en présence d'anti-statique non ionique.

Exemple 5

Dispersion pigmentaire beige utilisable pour colorer du polyéthylène linéaire basse densité :

| | |
|---|---|
| - pigment de cadmium | 14,6 % |
| - dioxyde de titane | 30,2 % |
| - oxyde de fer | 0,8 % |
| - noir de carbone | 0,2 % |
| - huile terpénique dimère α -pinène | 12 % |
| - alkylphénol éthoxylé | 4,6 % |
| - benzoate de sodium | 0,78 % |
| - dioctylsulfosuccinate de sodium | 4,2 % |
| - condensat d'acide gras | 0,6 % |
| - condensat d'acide gras dérivé d'ammonium quaternaire | 0,02 % |
| - alkylpolyalcoxylate | 32 % |
| | 100 % |

Utilisée à une teneur de 1 % dans un polyéthylène de grande fluidité, cette dispersion permet la fabrication de bouchons de faible épaisseur injectés à grande cadence sans patinage de vis et de façon homogène.

Exemple 6

Dispersion pigmentaire brune utilisable pour colorer du polypropylène :

| | |
|---|---|
| - pigments d'oxyde de fer | 28,5 % |
| - jaune de chrome | 21,4 % |
| - dioxyde de titane | 10 % |
| - noir de carbone | 0,09 % |
| - huile terpénique dimère α-pinène | 16,4 % |
| - alkylphénol éthoxylé | 6,6 % |
| - benzoate de sodium | 0,3 % |
| - dioctylsulfosuccinate de sodium | 1,5 % |
| - condensat d'acide gras | 1 % |
| - condensat d'acide gras dérivé d'ammonium quaternaire | 0,01 % |
| - alkylpolyalcoxylate | 14,2 % |
| | 100 % |

Utilisée à une teneur de 3 %, cette dispersion permet, par exemple, la fabrication de pots de fleurs de faible épaisseur sans altérer les propriétés mécaniques et sans patinage de vis lors de l'injection.

Exemple 7

Dispersion pigmentaire bleue utilisable pour colorer du film polyéthylène basse densité radicalaire et linéaire :

| | |
|---|---|
| - pigment de phtacocyanine | 8,7 % |
| - pigment d'outremer | 7,3 % |
| - dioxyde de titane | 49,9 % |
| - huile terpénique dimère α-pinène | 23,2 % |
| - alkylphénol éthoxylé | 9,5 % |
| - condensat d'acide gras | 1,4 % |
| | 100 % |

Utilisée a une teneur de 2, 75 %, cette dispersion permet la fabrication de film de 30 microns d'épaisseur, coloré de façon uniforme, sans modification des paramètres d'extrusion.

Exemple 8

Dispersion pigmentaire grise utilisable pour colorer du tube PVC rigide en extrusion :

| | |
|---|---|
| - noir de carbone | 8,4 % |
| - dioxyde de titane | 41,8 % |
| - huile terpénique dimère α-pinène | 49,8 % |
| | 100 % |

Utilisée à une teneur de 0,4 %, cette dispersion permet de maintenir les caractéristiques mécaniques du tube extrudé.

Il est bien entendu que les exemples et modes d'exécution décrits ci-dessus ne présentent aucun caractère limitatif et qu'ils peuvent recevoir toutes modifications désirables dans le cadre de l'invention telle que définie par les revendications. En particulier, on pourra utiliser une autre huile à base de carbures de la série terpénique qu'un dimère de l'α-pinène, tels que des terpènes monocycliques comme le terpinéol, bicycliques comme le bornène, ou des oligomères de ces terpènes. On pourra également ajouter des additifs destinés à apporter des effets complémentaires, tels qu'une protection thermique, une stabilisation par rapport au rayonnement ultraviolet, des effets antistatiques, ignifuges, fongicides, des agents odorants. On pourra également faire usage d'une charge composée de minéraux en feuillets, tels que les micas potassiques et/ou sodiques, muscovites, paragonites, la kaolinite, ou encore des minéraux en aiguilles commes les zéolites sodiques (natrolite) pour obtenir des effets visuels spéciaux. D'autres minéraux tels que les feldspaths potassiques et/ou sodiques, les silicates d'alumine, le corindon, les spinelles, les phosphates, en particulier l'apatite, pourront également servir d'adjuvants de charge dans la dispersion.

## Revendications

### Revendications pour les Etats contractants suivants : AT, BE, DE, DK, FR, GB, GR, IT, LU, NL, SE

1. Dispersion de colorant liquide constituant un ingrédiant pour la fabrication de matières plastiques destiné à être incorporé dans ces matières plastiques avant leur transformation et destinée à colorer dans la masse ces matières plastiques, la dispersion comprenant au moins une matière colorante contenue dans un véhicule, caractérisée en ce que le véhicule comprend une huile à base de carbures de la série terpénique.

2. Dispersion selon la revendication 1, caractérisée en ce que le véhicule comprend une huile terpénique à base de pinène.

3. Dispersion selon la revendication 2, caractérisée en ce que ladite huile terpénique est constituée par un dimère de l'α-pinène.

4. Dispersion selon la revendication 1, caractérisée en ce que le véhicule contient un alkylphénol.

5. Dispersion selon la revendication 4, caractérisée en ce que ledit alkylphénol est un alkylphénol éthoxylé de formule

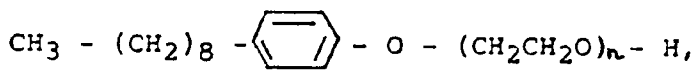

n variant entre 2 et 14.

6. Dispersion selon la revendication 1, caractérisée en ce qu'elle comprend au moins un agent tenio-actif choisi parmi le groupe comprenant le dioctylsulfosuccinate de sodium, le benzoate de sodium, les condensats d'acide gras, les esters phosphoriques et les alkylpolyalcoxylates.

7. Dispersion selon la revendication 1, caractérisée en ce que le véhicule comprend une charge.

8. Dispersion selon la revendication 7, caractérisée en ce que la charge est choisie parmi le groupe de substances comprenant les micas potassiqes et/ou sodiques, la kaolinite, les feldspaths potassiques et/ou sodiques, les silicates d'alumine, le corindon, les spinelles, les phosphates, en particulier l'apatite, les zéolites sodiques.

9. Dispersion selon la revendication 1, caractérisée en ce qu'elle présente un rapport teneur en matières colorantes/teneur en véhicule compris entre 0,1 et 5.

10. Dispersion selon la revendication 1, caractérisée en ce que le véhicule comprend entre 20 et 90% de ladite huile.

11. Dispersion selon la revendication 4, caractérisée en ce que le véhicule comprend entre 5 et 35% d'alkylphénol.

12. Utilisation de la dispersion selon l'une des revendications 1 à 11, pour l'obtention de matières plastiques teintées, caractérisée en ce que la dispersion est ajoutée à la matière plastique à transformer à des teneurs variant entre 0,5 et 3%.

**Revendications pour l'Etat contractant suivant : ES**

1. Utilisation d'une dispersion de colorant liquide pour l'obtention de matières plastiques teintées dans la masse, la dispersion étant destinée à être incorporée dans ces matières plastiques avant leur transformation et destinée à colorer dans la masse ces matières plastiques, la dispersion comprenant au moins une matière colorante contenue dans un véhicule, caractérisée en ce que ledit véhicule de cette dispersion comprend une huile à base de carbures de la série terpénique.

2. Utilisation selon la revendication 1, caractérisée en ce que ledit véhicule comprend une huile terpénique à base de pinène.

3. Utilisation selon la revendication 2, caractérisée en ce que ladite huile terpénique est constituée par un dimère de l'α-pinène.

4. Utilisation selon la revendication 1, caractérisée en ce que le véhicule contient un alkylphénol.

5. Utilisation selon la revendication 4, caractérisée en ce que ledit alkylphénol est un alkylphénol éthoxyle de formule

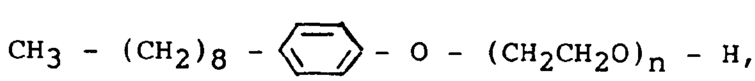

n variant entre 2 et 14.

6. Utilisation selon la revendication 1, caractérisée en ce que ladite dispersion comprend au moins un agent tensio-actif choisi parmi le groupe comprenant le dioctylsulfosuccinate, le sodium, le benzoate de sodium, les condensats d'acide gras, les esters phosphoriques et les alkylpolyalcoxylates.

7. Utilisation selon la revendication 1, caractérisée en ce que le véhicule comprend une charge.

8. Utilisation selon la revendication 7, caractérisée en ce que la charge est choisi parmi le groupe de substances comprenant les micas potassiques et/ou sodiques, la kaolinite, les feldspaths potassiques et/ou sodiques, les silicates d'alumine, le corindon, les spinelles, les phosphates, en particulier l'apatite, les zéolites sodiques.

9. Utilisation selon la revendication 1, caractérisée en ce que ladite dispersion présente un rapport teneur en matières colorantes/teneur en véhicule compris entre 0,1 et 5.

10. Utilisation selon la revendication 1, caractérisée en ce que le véhicule comprend entre 20 et 90% de ladite huile.

11. Utilisation selon la revendication 4, caractérisée en ce que le véhicule comprend entre 5 et 35% d'alkylphénol.

12. Utilisation selon l'une des revendications 1 à 11, caractérisée en ce que la dispersion est ajoutée à la matière plastique à transformer à des teneurs variant entre 0,5 et 3%.

## Claims

### Claims for the following Contracting States : AT, BE, DE, DK, FR, GB, GR, IT, LU, NL, SE

1. Liquid colorant dispersion constituting an ingredient for the manufacturing of plastic materials intended to be incorporated in these plastic materials prior to their transformation and intended to color in bulk these plastic materials, the dispersion comprising at least one colorant material contained in a vehicle, characterized in that the vehicle comprises an oil based on hydrocarbons of the terpene series.

2. Dispersion according to claim 1, characterized in that the vehicle comprises a terpene oil based on pinene.

3. Dispersion according to claim 2, characterized in that the said terpene oil is constituted by a dimer of $\alpha$-pinene.

4. Dispersion according to claim 1, characterized in that the vehicle contains an alkylphenol.

5. Dispersion according to claim 4, characterized in that the said alkylphenol is an ethoxylated alkylphenol of the formula

$CH_3-(CH_2)_8-$ 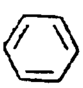 $-O-(CH_2CH_2O)_n-H$,

wherein n varies between 2 and 14.

6. Dispersion according to claim 1, characterized in that it comprises at least one surface active agent selected from the group comprising sodium dioctylsulfosuccinate, sodium benzoate, fatty acid condensates, phosphoric esters and alkylpolyalkoxylates.

7. Dispersion according to claim 1, characterized in that the vehicle comprises a charge.

8. Dispersion according to claim 7, characterized in that the charge is selected from the group of substances comprising potassium and/or sodium micas, kaolinite, potassium and/or sodium feldspars, aluminium silicates, corundum, spinells, phosphates, particularly apatite, sodium zeolites.

9. Dispersion according to claim 1, characterized in that it has a weight ratio of colorant materials/vehicle

weight comprised between 0,1 and 5.

**10.** Dispersion according to claim 1, characterized in that the vehicle comprises between 20 and 90% of the said oil.

**11.** Dispersion according to claim 4, characterized in that the vehicle comprises between 5 and 35% alkylphenol.

**12.** Use of the dispersion according to one of claims 1 to 11, for obtaining tinted plastic materials, characterized in that the dispersion is added to the plastic material to be transformed at weights varying between 0,5 and 3%.

**Claims for the following Contracting State : ES**

**1.** Use of a liquid colorant dispersion for obtaining plastic materials colored in bulk, the dispersion being intended to be incorporated in these plastic materials prior to their transformation and intended to color in bulk these plastic materials, the dispersion comprising at least one colorant material contained in a vehicle, characterized in that the vehicle comprises an oil based on hydrocarbons of the terpene series.

**2.** Use according to claim 1, characterized in that the vehicle comprises a terpene oil based on pinene.

**3.** Use according to claim 2, characterized in that the said terpene oil is constituted by a dimer of α-pinene.

**4.** Use according to claim 1, characterized in that the vehicle contains an alkylphenol.

**5.** Use according to claim 4, characterized in that the said alkylphenol is an ethoxylated alkylphenol of the formula

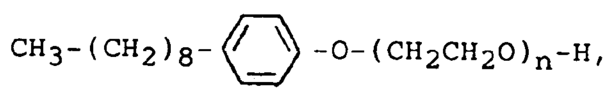

wherein n varies between 2 and 14.

**6.** Use according to claim 1, characterized in that it comprises at least one surface active agent selected from the group comprising sodium dioctylsulfosuccinate, sodium benzoate, fatty acid condensates, phosphoric esters and alkylpolyalkoxylates.

**7.** Use according to claim 1, characterized in that the vehicle comprises a charge.

**8.** Use according to claim 7, characterized in that the charge is selected from the group of substances comprising potassium and/or sodium micas, kaolinite, potassium and/or sodium feldspars, aluminium silicates, corundum, spinells, phosphates, particularly apatite, sodium zeolites.

**9.** Use according to claim 1, characterized in that it has a weight ratio of colorant materials/vehicle weight comprised between 0,1 and 5.

**10.** Use according to claim 1, characterized in that the vehicle comprises between 20 and 90% of the said oil.

**11.** Use according to claim 4, characterized in that the vehicle comprises between 5 and 35% alkylphenol.

**12.** Use according to one of claims 1 to 11, characterized in that the dispersion is added to the plastic material to be transformed at weights varying between 0,5 and 3%.

## Patentansprüche

### Patentansprüche für folgende Vertragsstaaten : AT, BE, DE, DK, FR, GB, GR, IT, LU, NL, SE

1. Flüssige Farbstoffdispersion als Bestandteil bei der Herstellung von Kunststoffen, dazu bestimmt, vor der Verarbeitung dieser Kunststoffe mit ihnen vermischt zu werden und sie in der Masse einzufärben, wobei die Dispersion mindestens einen Farbstoff in einem Lösungsmittel umfasst und dadurch gekennzeichnet ist, dass das Lösungsmittel ein Öl auf der Basis von Kohlenstoffverbindungen der Terpenreihe umfasst.

2. Dispersion gemäss Anspruch 1, dadurch gekennzeichnet, dass das Lösungsmittel ein Terpenöl auf der Grundlage von Pinen ist.

3. Dispersion gemäss Anspruch 2, dadurch gekennzeichnet, dass das benannte Terpenöl ein Dimer des $\alpha$-Pinens ist.

4. Dispersion gemäss Anspruch 1, dadurch gekennzeichnet, dass das Lösungsmittel ein Alkylphenol enthält.

5. Dispersion gemäss Anspruch 4, dadurch gekennzeichnet, dass das benannte Alkylphenol ein ethoxyliertes Alkylphenol der Formel

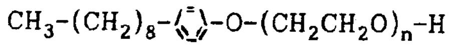

mit n zwischen 2 und 14 ist.

6. Dispersion gemäss Anspruch 1, dadurch gekennzeichnet, dass sie mindestens einen oberflächenaktiven Stoff umfasst, der aus der Gruppe von Natriumdioctylsulfosuccinat,Natriumbenzoat,Fettsäurekondensaten, Phosphorsäureestern und Alkylpolyalkoxylaten ausgewählt ist.

7. Dispersion gemäss Anspruch 1, dadurch gekennzeichnet, dass das Lösungsmittel einen Füllstoff aufweist.

8. Dispersion gemäss Anspruch 7, dadurch gekennzeichnet, dass der Füllstoff aus der Gruppe ausgewählt ist, die die Kalium- und/oder Natriumglimmer, Kaolinit, die Kalium- und/oder Natriumfeldspate, die Aluminiumsilikate, Korund, die Spinelle, die Phosphate und insbesondere den Apatit sowie die Natriumzeolithe umfasst.

9. Dispersion gemäss Anspruch 1, dadurch gekennzeichnet, dass sie ein Verhältnis zwischen Farbstoffgehalt und Lösungsmittelgehalt von 0,1 bis 5 aufweist.

10. Dispersion gemäss Anspruch 1. dadurch gekennzeichnet, dass das Lösungsmittel zwischen 20 und 90 % des benannten Öls enthält.

11. Dispersion gemäss Anspruch 4, dadurch gekennzeichnet, dass das Lösungsmittel zwischen 5 und 35 % an Alkylphenol enthält.

12. Verwendung der Dispersion gemäss einem der Ansprüche 1 bis 11 zur Bereitung getönter Kunststoffe, dadurch gekennzeichnet, dass die Dispersion dem zu verarbeitenden Kunststoff in Anteilen von 0,5 bis 3 % zugegeben wird.

### Patentansprüche für folgenden Vertragsstaat : ES

1. Verwendung einer flüssigen Farbstoffdispersion bei der Herstellung von massegetönten Kunststoffen, wobei die Dispersion dazu bestimmt ist, vor der Verarbeitung dieser Kunststoffe mit ihnen vermischt zu werden und sie in der Masse einzufärben, wobei die Dispersion mindestens einen Farbstoff in einem Lösungsmittel umfasst und dadurch gekennzeichnet ist, dass das Lösungsmittel ein Öl auf der Basis von Kohlenstoffverbindungen der Terpenreihe umfasst.

2. Verwendung gemäss Anspruch 1, dadurch gekennzeichnet, dass das Lösungsmittel ein Terpenöl auf der

Grundlage von Pinen ist.

3. Verwendung gemäss Anspruch 2, dadurch gekennzeichnet, dass das benannte Terpenöl ein Dimer des α-Pinens ist.

4. Verwendung gemäss Anspruch 1, dadurch gekennzeichnet, dass das Lösungsmittel ein Alkylphenol enthält.

5. Verwendung gemäss Anspruch 4, dadurch gekennzeichnet, dass das benannte Alkylphenol ein ethoxyliertes Alkylphenol der Formel

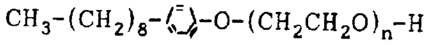

mit n zwischen 2 und 14 ist.

6. Verwendung gemäss Anspruch 1, dadurch gekennzeichnet, dass die benannte Dispersion mindestens einen oberflächenaktiven Stoff umfasst, der aus der Gruppe von Natriumdioctylsulfosuccinat, Natriumbenzoat, den Fettsäurekondensaten, den Phosphorsäureestern und den Alkylpolyalkoxylaten ausgewählt ist.

7. Verwendung gemäss Anspruch 1, dadurch gekennzeichnet, dass das Lösungsmittel einen Füllstoff aufweist.

8. Verwendung gemäss Anspruch 7, dadurch gekennzeichnet, dass der Füllstoff aus der Gruppe ausgewählt ist, die die Kalium- und/oder Natriumglimmer, Kaolinit, die Kalium- und/oder Natriumfeldspate, die Aluminiumsilikate, Korund, die Spinelle, die Phosphate und insbesondere den Apatit sowie die Natriumzeolithe umfasst.

9. Verwendung gemäss Anspruch 1, dadurch gekennzeichnet, dass die be nannte Dispersion ein Verhältnis zwischen Farbstoffgehalt und Lösungsmittelgehalt von 0,1 bis 5 aufweist.

10. Verwendung gemäss Anspruch 1, dadurch gekennzeichnet, dass das Lösungsmittel zwischen 20 und 90 % des benannten Öls enthält.

11. Verwendung gemäss Anspruch 4, dadurch gekennzeichnet, dass das Lösungsmittel zwischen 5 und 35 % an Alkylphenol enthält.

12. Verwendung gemäss einem der Ansprüche 1 bis 11, dadurch gekennzeichnet, dass die Dispersion dem zu verarbeitenden Kunststoff in Anteilen von 0,5 bis 3 % zugegeben wird.